# EUROPEAN PATENT SPECIFICATION

(11) **EP 2 449 818 B1**
(45) Date of publication and mention of the grant of the patent: **29.05.2013**
(21) Application number: 09803936.5
(22) Date of filing: 28.12.2009
(51) Int. Cl.: H04W 36/30

(54) **IMPROVED MOBILITY MANAGEMENT IN A COORDINATED MULTIPOINT NETWORK**
VERBESSERTE MOBILITÄTSVERWALTUNG IN EINEM KOORDINIERTEN MEHRPUNKTNETZWERK
GESTION DE MOBILITÉ AMÉLIORÉE DANS UN RÉSEAU MULTIPOINT COORDONNÉ

(30) Priority: 02.07.2009 US 222769 P
(43) Date of publication of application: 09.05.2012
(73) Proprietor: Telefonaktiebolaget LM Ericsson (publ), 164 83 Stockholm (SE)
(72) Inventor: GERSTENBERGER, Dirk, S-113 56 Stockholm (SE); LARSSON, Daniel, S-171 52 Solna (SE); MÜLLER, Walter, S-194 62 Upplands Väsby (SE)
(74) Representative: Kühn, Friedrich Heinrich
(86) International application number: PCT/SE2009/051505
(87) International publication number: WO 2011/002374

(56) References cited:
- EP-A1- 1 871 130
- GB-A- 2 362 297
- HUAWEI: "RAN2 considerations for coordinated multipoint transmission and reception" 3GPP DRAFT; R2-093107 RAN2 CONSIDERATIONS FOR COMP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090428, 28 April 2009 (2009-04-28), XP050340849 [retrieved on 2009-04-28]
- MAHESH VEMULA ET AL: "Inter-Cell Coordination, Opportunistic Beamforming and Scheduling" COMMUNICATIONS, 2006. ICC '06. IEEE INTERNATIONAL CONFERENCE ON, IEEE, PI, 1 June 2006 (2006-06-01), pages 5319-5324, XP031025760 ISBN: 978-1-4244-0354-7
- FUJITSU: "CoMP Cell Set Configuration" 3GPP DRAFT; R2-093075 COMP CELL SET CONFIGURATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090428, 28 April 2009 (2009-04-28), XP050340823 [retrieved on 2009-04-28]

## Description

### FIELD OF THE INVENTION

The present invention generally relates to wireless communication networks, and particularly relates to mobility management, e.g., handover-related operations, in a coordinated multipoint network.

### BACKGROUND

Coordinated Multi Point (CoMP) transmission and reception refers to a system where the transmission and/or reception at multiple, geographically separated antenna sites is dynamically coordinated in order to improve system performance. The coordination can either be distributed, by means of direct communication between the different sites, or by means of a central coordinating node.

CoMP is considered for LTE-Advanced as a tool to improve the coverage of high data rates, the cell-edge throughput and/or to increase system throughput. (LTE stands for 3G Long Term Evolution.) In particular, the goal is to distribute the user perceived performance more evenly in the network by taking control of the inter-cell interference.

Downlink coordinated multi-point transmission implies dynamic coordination among multiple geographically separated transmission points. Examples of coordinated transmission schemes include: coordinated scheduling and/or beamforming where data to a single user equipment (UE) is instantaneously transmitted from one of the transmission points, and scheduling decisions are coordinated to control, e.g., the interference generated in a set of coordinated cells. As another example, joint processing/transmission may be used, where data to a single UE is simultaneously transmitted from multiple transmission points, e.g., to (coherently or non-coherently) improve the received signal quality and/or cancel actively interference for other UEs. Uplink coordinated multi-point reception implies joint reception and processing of signals at multiple, geographically separated points. Scheduling decisions can be coordinated among cells to control interference.

With the above in mind, a CoMP architecture can, in the case of intra-eNB CoMP, be based on the Evolved NodeB (eNB or eNodeB) acting as a central coordinating node. It is up to the vendor to decide how to implement this, e.g., how many cells to control and how to solve the communication between them and the eNB. Hence, the interfaces can be non-standardized, which is more likely to allow for more flexible and advanced CoMP methods to be used. From the core network perspective intra-eNB CoMP is transparent, i.e., the MME and the S-GW access the eNB over the S1 interface.

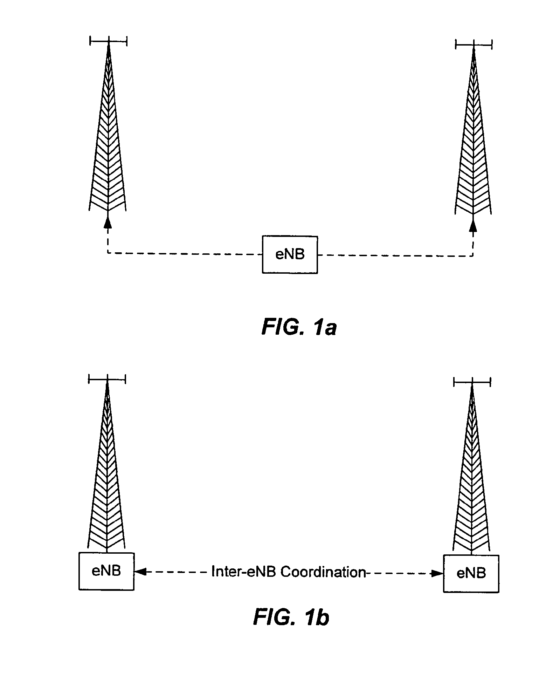

Inter-eNB CoMP could primarily be seen as distributed CoMP (even though centralized operation also can be implemented). In this case the coordination is carried out via direct communication between the eNBs, e.g., over an (possibly) enhanced X2 interface. From the core network perspective inter-eNB CoMP should be transparent as well. The MME and the S-GW access the eNB over the S1 interface. If necessary, control and data traffic is forwarded over X2. Figures 1 a and 1 b illustrate example architectural options.

As already mentioned above, downlink CoMP implies dynamic coordination among multiple geographically separated transmission points. At a high level, coordination schemes can be divided into two categories: coordinated scheduling and/or beamforming; and joint processing/transmission.

The first category is characterized in that data to a single UE is instantaneously transmitted from one of the transmission points, and in that scheduling decisions and/or generated beams are coordinated in order to control the created interference. The main advantages of these schemes compared to schemes involving joint processing / transmission (see below) are that the requirements on the coordination links and on the backhaul are much reduced, since typically only information on scheduling decisions and/or generated beams (and information needed for their generation) need to be coordinated, and the user data does not need to be made available at the coordinated transmission points, since there is only one serving transmission point for one particular UE.

The second category, joint processing/transmission, is characterized in that data to a single UE is simultaneously transmitted from *multiple* transmission points, e.g., to (coherently or non-coherently) improve the received signal quality and/or actively cancel interference for other UEs. This category of schemes puts higher requirements on the coordination links and the backhaul since the user data needs to be made available at the multiple coordinated transmission points. The amount of data to be exchanged over the coordination links is also larger, e.g., channel knowledge and computed transmission weights.

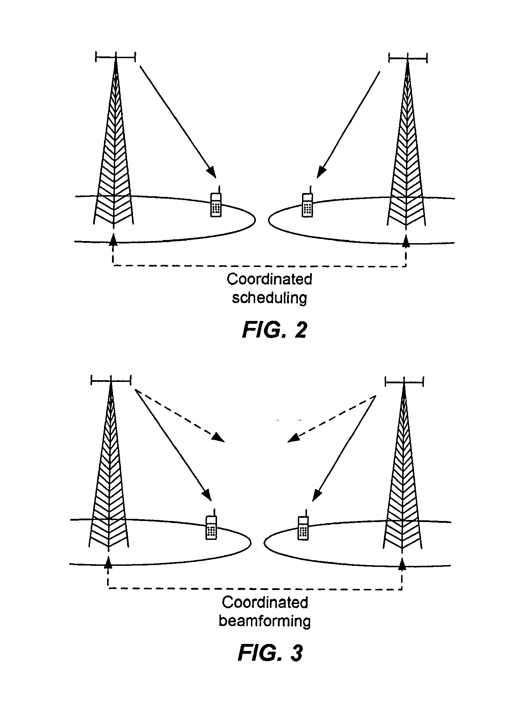

The most straightforward approach to CoMP is coordinated scheduling, meaning that UEs are scheduled to be served by their attached cells in a manner such that the mutual interference among them (within the coordination set) is minimized, as illustrated in Figure 2. This can, to some extent, be seen as an extension of the inter-cell interference coordination (ICIC) functionality present already in LTE Rel-8. However, the previous ICIC schemes are based on distinguishing users by geometry and the coordinated scheduler assigns resource blocks to users such that SINR degradations due to inter-cell interference are avoided as much as possible while maintaining the baseline Reuse-1 resource usage. There was no utilization of fast time-scale channel knowledge in order to actively coordinate the involving cells.

In coordinated scheduling, each UE maintains the conventional notion of correspondence with a serving cell. A UE still transmits to and receives from only its attached (serving) cell. However, the cell reselection may occur at a TTI interval for best performance. With the knowledge of the path gain between all active UEs and the cells and possibly additional information from neighboring coordination sets, the controller can then carefully reorder and select the UEs to be served in the same TTI or resource block so that the interference experienced by each UE meets a certain target. Since it is a scheduling based solution, the physical layer transmission and reception of user data remain unchanged. However, the CoMP architecture allows for proactive control of the interference condition and more accurate link adaptation, thereby leading to significant improvement (50-100%) in cell edge user rate with either slight increase or decrease (±5%) in system throughput over LTE Rel-8 without any coordination.

In the baseline coordinated scheduling, each coordination set acts independently without communicating with neighboring coordination sets. The controller in a coordination set determines which UEs are to be served by the cells they are attached to in the same TTI or resource block based on the path gain information and factors such as transmission priority and packet size. In general, each UE with an active session is placed in a queue according to its transmission priority, which reflects the transmission need based on some priority rule, e.g., how long it has stayed in the queue. They are then placed one by one into the scheduling list if a compatibility test is passed. The test criterion may be that the SIR for all UEs in the schedule should be above a certain threshold. It may also be that the highest interference for each UE should not exceed a certain threshold. The target may be adjusted according to traffic and buffer overflow conditions. The impact of this baseline solution on standardization is limited if it is considered as intra-eNB CoMP. All signaling functionalities are in place in LTE Rel-8 already.

Coordinated beamforming, such as illustrated in Figure 3, can be used for downlink transmission if the transmission points in the coordination set are equipped with antenna arrays. In this context, coordinated beamforming is based on: transmit powers and beamforming weights being jointly adapted for all UEs in the coordination set, where beamforming weights are constant for all frequencies (non-frequency dependent), and where one transmission point serves multiple UEs (SDMA), as in multiuser MIMO.

A multi-antenna UE may receive multiple data streams. The streams may be transmitted from multiple transmission points or a single transmission point in the coordination set. In the second case, the maximum number of data streams transmitted to a UE equals the number of antenna clusters (sets of antenna arrays spaced far enough apart) at the transmission point. Note that UE data needs to be transported to multiple transmission points in the first case which requires a fast high-capacity backhaul.

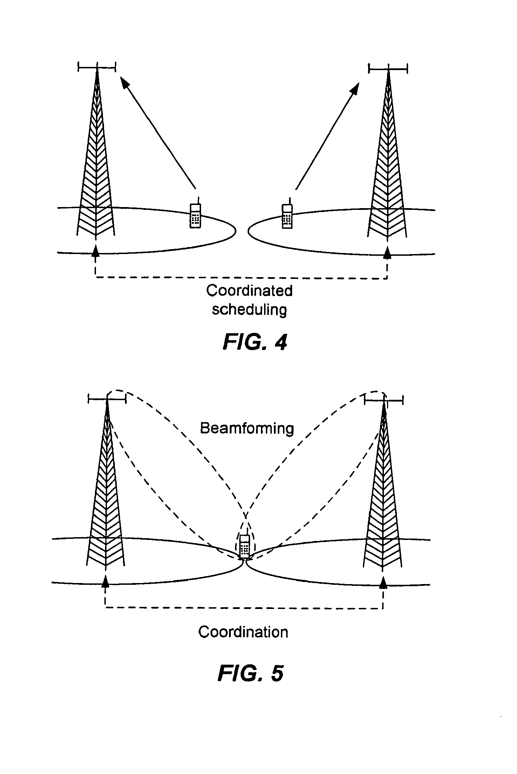

As with downlink CoMP, the most straightforward approach to uplink CoMP is coordinated scheduling, i.e., the scheduling of UEs to transmit are coordinated among the sites in such a way that the interference among them is minimized. One such approach is illustrated in Figure 4. Thus, the same coordinated scheduling approach as described for the downlink is also applicable for the uplink; the only difference is how interference is calculated. All required measurements and signaling functionality is already in place in LTE Rel-8.

However, certain challenges arise in CoMP implementations, particularly as relates to mobility management. In the context of LTE, such challenges arise because existing mobility mechanisms in LTE do not support macro-diversity transmission or reception, and are therefore relying on fast and reliable indications for cell change. Existing mechanisms in 3GPP Rel-8 include trigger criteria and hysteresis values to support fast and accurate cell change in a range of scenarios. However, the information available to the network for target cell selection is mostly based on signal power measurements, and does not accurately help to determine the most suitable target cell for handover. In some cases, handover is performed to unsuitable target cells, resulting either in failed handovers or a return of the UE to the source cell after a short while.

### SUMMARY

In one aspect, the present invention, in one or more embodiments, improves mobility management-e.g., handover processing enhancement-by providing/utilizing additional information in combination with CoMP operation, for enhancing the handover procedure. For example, the additional information is used to improve judging the most suitable target cell. The additional information can be, for example, angle of arrival or time advance of the UE in handover, Round Trip Time (RTT), power headroom or signal strength.

In at least one embodiment, the information used for handover processing at source and/or target base stations is enhanced or otherwise made richer by the use of "geometric information" for mobile terminals. In one such embodiment, the geometric information used for handover processing associated with a given terminal indicates something about the mobile terminal's position (relative or absolute).

In at least one embodiment, the information is used to improve signal measurements made by one or more cells that are candidates for receiving the mobile terminal in handover from a source cell. For example, if the geometric information includes directional information for the mobile terminal as regards the source cell-e.g., angle-of-arrival information-a candidate base station can derive the mobile terminal's approximate angle relative to the candidate base station, and thus improve its reception/measurement of signals from the mobile terminal. The candidate base station thus returns better or more accurate signal measurement information to the source base station, which therefore can make an improved evaluation of the best candidate base station to select for as the handover target.

A target base station uses the geometric information to improve its transmission to and/or reception from the mobile terminal. For example, it may use the geometric information to better receive the Physical Random Access Channel (PRACH) or other uplink signal reception-e.g., Sounding Reference Signals (SRSs)-from the mobile terminal, and/or to improve its downlink transmissions to the mobile terminal. In that latter case, one or more embodiments use the geometric information to bias or

RAN2 considerations for coordinated multipoint transmission and reception" 3GPP DRAFT; R2-093107 RAN2 CONSIDERATIONS FOR COMP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090428, 28 April 2009 (2009-04-28), XP050340849, describes a prior art method of mobility management in a coordinated multipoint network.

EP 1871130 describes a prior art method for handover and a base station in a radio communication network. otherwise direct beamforming toward the mobile terminal's position, or at least in the direction of the mobile terminal. Such directing or steering of the target base station's transmissions improves signal reception at the mobile terminal and can reduce interference seen by other terminals or elsewhere in the network. Such directing or steering can be done at least initially upon or as part of receiving the mobile terminal in handover, thereby improving handover reliability.

Of course, the present invention is not limited to the above features and advantages. Indeed, those skilled in the art will recognize additional features and advantages upon reading the following detailed description, and upon viewing the accompanying drawings.

### BRIEF DESCRIPTION OF THE DRAWINGS

Figs. 1a) and 1b) illustrate intra- and inter-eNB scenarios in a Coordinated Multipoint (CoMP) Network.
Fig. 2 illustrates downlink CoMP, based on coordinated scheduling.
Fig. 3 illustrates downlink CoMP, based on coordinated beamforming.
Fig. 4 illustrates uplink CoMP, based on coordinated scheduling.
Fig. 5 illustrates uplink CoMP, based on coordinated beamforming.
Fig. 6A illustrates on embodiment of a method of mobility management in a CoMP network, while Fig. 6B illustrates corresponding details for the steps depicted in Fig. 6A.
Fig. 7 illustrates a simplified example wireless communication network, e.g., a CoMP network, including base stations configured for one or more embodiments of mobility management enhancements as taught herein.
Fig. 8 illustrates example embodiments for a source base station and a candidate base station that is a target for handover of a mobile terminal from the source base station.

### DETAILED DESCRIPTION

In one or more embodiments presented herein, when a UE is evaluating cells for handover target candidates in a CoMP scenario, the target cell selection considers the angle of the source cell in order to determine the angle from the target cell, so that the target cell can direct a beam towards the UE in handover. This action, which is depicted in Figure 5, results in a concentration of energy to and from the UE from the target cell, and therefore contributes to a more reliable handover. In addition, the target cell selection can also make use of time advance information from the source and/or the target cell to determine a more accurate position of the UE. As noted, the angle/direction and timing information all can be considered individually or collectively to be examples of the geometric information used herein to improve mobility management.

In the same or other embodiments, the source cell evaluates the quality of the target cell by ordering the target cell to measure on the UE and to report the measured quality back. The quality measure can be e.g., the received signal quality of the uplink reference signals, the quality of the received Physical Uplink Control Channel (PUCCH) or the quality of received SRS. The coordination between the cells can, e.g., be done using the X2 interface or a proprietary interface between the source eNodeB and the target eNodeB(s).

Information provided to the target cell for performing the measurement may include angle of direction, time advance, RTT, power headroom, signal strength or geographical coordinates of the eNB from the source cell. Again, individual elements of such information and/or the collection of all or some of this information, is referred to herein as "geometric information".

The source cell may evaluate the quality of multiple cells that are candidates for receiving the UE in handover, either sequentially or in parallel, using the mechanism described above. Thus, after receiving the measurement information from one or multiple target cells, the source cell decides on the target cell for handover and initiates the handover to the target cell.

In the same or other embodiments, the target cell uses the measured angle and/or time advance for reception of PRACH during handover, in order to improve the quality of the received signal in the eNodeB.

Further, in at least one embodiment, the target cell uses the measured angle and/or time advance for transmission of downlink data after handover, in order to improve the quality of the received signal in the UE, and to avoid excess interference.

Of course, those skilled in the art will appreciate that, while the above teachings are advantageously applied in LTE and LTE Advanced systems, they are not limited to those applications. For example, the above teachings may be advantageously applied in other types of networks, such as other Orthogonal Frequency Division Multiplexing (OFDM) based systems, including WiMax.

In that broader context, the invention proposed herein provides mechanisms (e.g., signaling and processing operations) for enhancing handover performance in conjunction with the introduction of CoMP. The usage of angle and/or time advance information, or other such geometric information, for selecting the most suitable target cell before initiating the handover leads to more reliable target cell selections and thus provides more reliable handover decisions. In addition, excess interference can be avoided, and UE/base station transmissions made more reliable and robust, by properly directing energy to the UE from the target cell.

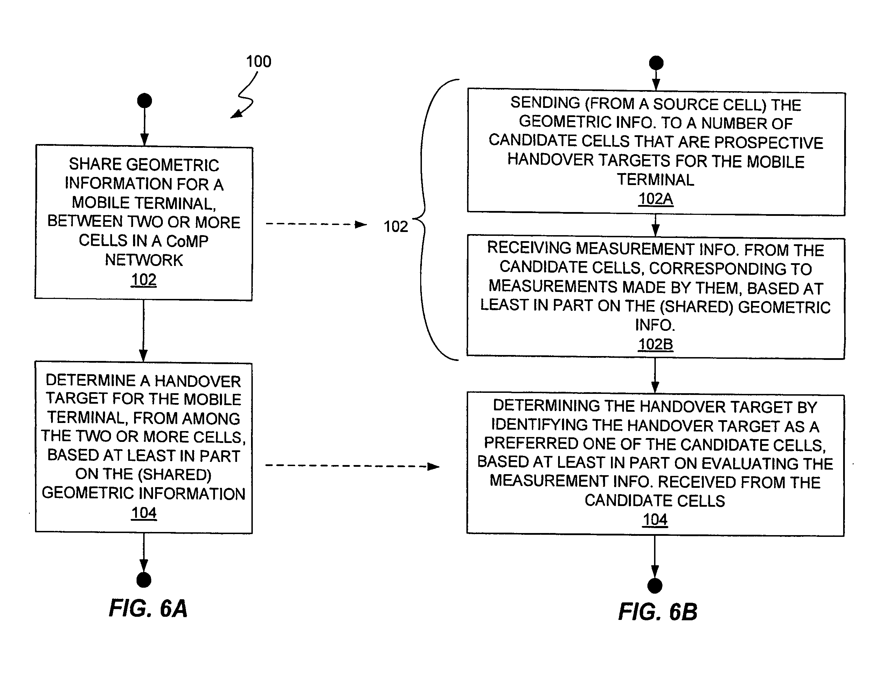

With the above non-limiting advantages in mind, one embodiment of the invention proposed herein comprises a method of mobility management in a coordinated multipoint network. Fig. 6A illustrates an example method 100, comprising sharing geometric information for a mobile terminal between two or more cells in the coordinated multipoint network (Step 102), where the geometric information is determined from signal measurements made for the mobile terminal. Further, the method 100 includes determining a handover target for the mobile terminal from among the two or more cells, based at least in part on the geometric information (Step 104). For example, the source (serving) base station in the source cell shares geometric information with one or more neighboring base stations that control one or more cells that are candidates for selection as the handover target.

As shown by way of example in Fig. 6B, in one or more embodiments, the step 102 of sharing the geometric information comprises a source cell sending the geometric information to a number of candidate cells that are prospective handover targets for the mobile terminal (Step 102A), and receiving measurement information from the candidate cells (Step 102B). The received measurement information corresponds to signal measurements made by the candidate cells based at least in part on the geometric information sent to them by the source cell. In this context, the step 104 of determining the handover target comprises identifying the handover target as a preferred one of the candidate cells, based at least in part on evaluating the measurement information received from the candidate cells. (Such evaluation can be performed by the source cell's controlling base station. Note that "base station" as used herein should be broadly construed to encompass, by way of non-limiting example, eNBs from LTE/LTE Advanced, as well as WiMax base stations or access points.)

In at least one embodiment, the geometric information relates to a relative or absolute position of the mobile terminal, with respect to one or more base stations in the coordinated multipoint network. In particular, in one or more embodiments, the geometric information includes one or more of: directional information for the mobile terminal relative to a source base station; timing advance information for the mobile terminal; and round-trip-time information for the mobile terminal.

Also, as noted, the step of sharing the geometric information may comprise a source base station in the coordinated multipoint network sending the geometric information to a candidate base station in the coordinated multipoint network that is a candidate for being selected as the handover target. In association with this, the contemplated method further includes the candidate base station using the geometric information to improve signal measurements made by the candidate base station for the mobile terminal, wherein said signal measurements are evaluated in said step of determining the handover target.

As such, in one or more embodiments, the geometric information is used in a target base station associated with a candidate cell in the coordinated multipoint network that is identified as the handover target, to improve transmissions by the target base station to the mobile terminal. Further, the target base station may use the geometric information to form or otherwise steer directional transmissions from the target base station to the mobile terminal, at least initially upon the mobile terminal being handed over to the target base station.

As one example, using the geometric information comprises using direction information present in the geometric information as received from the source base station, to direct transmissions toward the mobile terminal, or deriving directional information from the received geometric information-e.g., the target base station can use directional information and/or transmission timing information relating the terminal to the source base station, to estimate the terminal's direction or angle relative to the target base station.

In any case, in one or more embodiments, the target base station may use the geometric information to improve reception at the target base station of transmissions by the mobile terminal. Further, as noted, the geometric information may comprise one or more of: location information for a source base station, location information for one or more neighboring base stations associated with one or more candidate cells that are candidates for selection as the handover target; directional information relating the mobile terminal's angle or direction to the source and/or neighboring base stations; and timing information relating the mobile terminal's distance relative to the source and/or neighboring base stations.

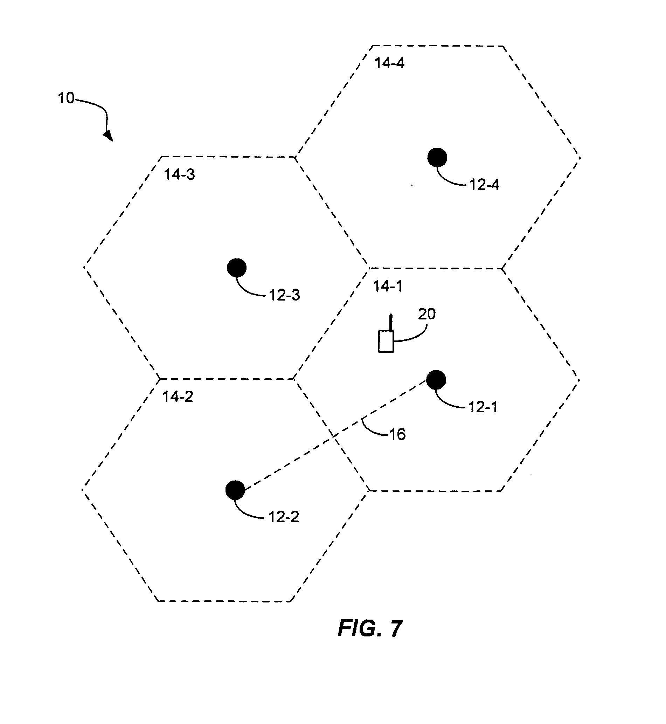

As an example of a network and associated base stations, Fig. 7 illustrates a wireless communication network 10, which is configured as a CoMP network in one or more embodiments. As a non-limiting example, the network 10 comprises an LTE or LTE Advanced network configured for CoMP operation.

One sees that the network 10 includes a number of base stations 12, which are depicted for clarity as 12-1, 12-2, and so on. These numbering suffixes are used when convenient for distinguishing operations at one base station 12 from another base station 12, and when such distinctions are not needed the reference numeral "12" serves a generic identifier for a given base station. Those skilled in the art will appreciate that where the network 10 comprises an LTE or LTE Advanced network, the base stations 12 are eNBs.

Each base station 12 defines or otherwise controls a cell 14, wherein the cells are referred to as 14-1, 14-2, and so on, when necessary to distinguish one cell from another, and otherwise the reference number "14" refers to any given cell in the singular or given cells in the plural. Those skilled in the art will also appreciate that cells may overlap, may be sectorized, may be uniform or non-uniform in size, and subject to other variations. In that sense, the figure should be understood as a non-limiting example. It should also be understood that the network 10 may include other nodes or entities, such as those in a Core Network (CN), which is not shown for the sake of simplicity.

One also sees that the base stations 12 may be communicatively interlinked by an inter-base station interface 16, such as the "X2" interface used in LTE. (Only one inter-base station communication link is shown for simplicity.) Such inter-base station linking can be advantageously used for sharing information between base stations, including the geometric information contemplated herein, for improving mobility management. For example, the geometric information is used to improve handover target selection and/or to improve transmission and/or reception between the mobile terminal in the target cell.

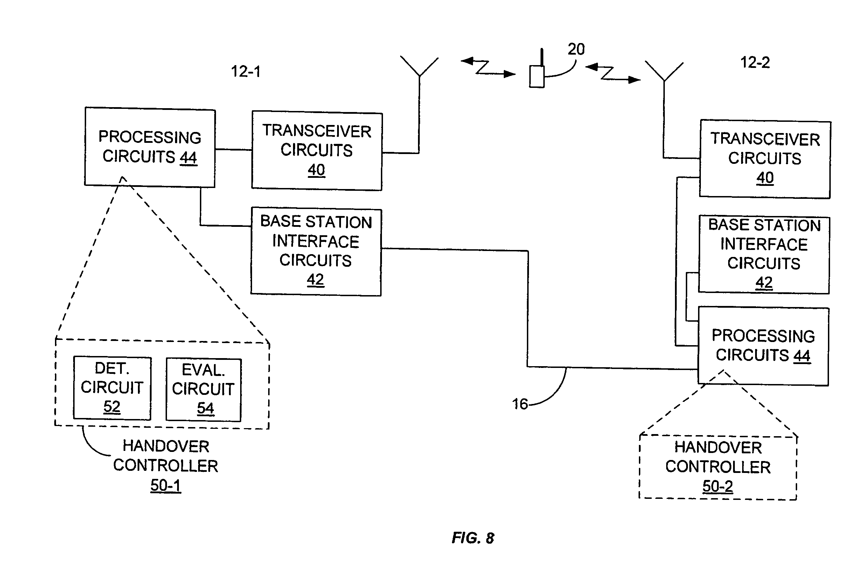

Referring now to Fig. 8, one sees a base station 12-1 and a base station 12-2. Both base stations 12 may be configured identically, or there may be differences between them. In any case, for the purposes of Fig. 8 and the following discussion, one may assume that the base station 12-1 is the source base station for a given mobile terminal 20, and that the base station 12-2 is a candidate base station for handover target selection and/or that the base station 12-2 has been selected as the handover target.

Referring to either one now, the base station 12 is configured to support mobility management in a coordinated multipoint network 10, and it comprises transceiver circuits 40 configured for transmitting signals to mobile terminals 20 and receiving signals from mobile terminals 20, and inter-base station interface circuits 42 configured for communicating with one or more other base stations in the coordinated multipoint network 10. The base station 12 further includes one or more processing circuits 44 operatively associated with the transceiver circuits 40 and the inter-base station interface circuits 42.

These processing circuits 44 are configured to, when the base station 12 is acting as source base station for a mobile terminal 20 (e.g., acting as base station 12-1): determine geometric information for the mobile terminal 20, based on signal measurements made for the mobile terminal 20, and send the geometric information to a target base station (e.g., base station 12-2), for use in handover processing by the target base station.

Referring specifically to the base station 12-1 now for source base station processing details, the one or more processing circuits 44 comprise a handover controller 50-1 including a determining circuit 52 configured to determine the geometric information for the mobile terminal 20. In one or more embodiments, the handover controller 50-1 further includes a handover target evaluation circuit 54 configured for identifying the target base station as the handover target from among a number of candidate base stations that are prospective handover targets. For example, base station 12-1 may evaluate base stations 12-2, 12-3, and so on, as candidates for receiving the mobile terminal 20 in handover.

In at least one such embodiment, the one or more processing circuits 44 of the base station 12-1 are configured to determine the geometric information as one or more of: directional information for the mobile terminal 20 relative to the source base station 12-1; timing advance information for the mobile terminal 20; round-trip-time information for the mobile terminal 20; and location information for the source base station 12-1.

Further, in at least one such embodiment, the one or more processing circuits 44 of the base station 12-1 are further configured to send the geometric information to a number of candidate base stations that are prospective handover targets for the mobile terminal 20, e.g., to base stations 12-2, 12-3, and so on, and to receive measurement information from the candidate base stations corresponding to signal measurements made by the candidate base stations based at least in part on the geometric information sent to them. Further, the processing circuits 44 of the base station 12-1 are configured to identify the target base station as a preferred one of the candidate base stations, based at least in part on evaluating the measurement information received from the candidate base stations.

Now referring to the base station 12-2 as a candidate base station and/or as a selected target base station, the base station 12-2 is configured to support mobility management in a coordinated multipoint network 10 and it comprises, as noted, transceiver circuits 40 configured for transmitting signals to mobile terminals 20 and receiving signals from mobile terminals 20. The base station 12-2 further comprises inter-base station interface circuits 42 configured for communicating with one or more other base stations in the coordinated multipoint network 10, and one or more processing circuits 44 operatively associated with the transceiver circuits 40 and the inter-base station interface circuits 42.

These processing circuits 44 are configured to, when the base station 12-2 is acting as a prospective target base station for a mobile terminal 20, receive geometric information from a source base station 12-1 for the mobile terminal 20, where the geometric information is based on signal measurements made for the mobile terminal 20-e.g., measurements made by or for the source base station 12-1. In complementary fashion, the one or more processing circuits 44 of the prospective target base station 12-2 are configured to make signal measurements for the mobile terminal 20, based at least in part on the geometric information, and return the signal measurements to the source base station 12-1, for use by the source base station 12-1 in selecting a target base station (from among the candidates) for handover of the mobile terminal 20.

In one or more embodiments, the one or more processing circuits 44 of the base station 12-2 are configured to use the geometric information in improving the base station's reception of signals from the mobile terminal 20, for making said signal measurements. That is, the signal measurements made by the base station 12-2 can be improved through use of the geometric information, meaning that such measurement information provides a better basis for selecting the handover target.

In one or more embodiments, the geometric information comprises one or more of: directional information for the mobile terminal 20 relative to the source base station 12-1; timing advance information for the mobile terminal 20; round-trip-time information for the mobile terminal 20; and location information for the source base station 12-1.

In the same or other embodiments, the one or more processing circuits 44 of the base station 12-2 are further configured to derive directional information for the mobile terminal 20 relative to the base station 12-2 based on the geometric information received from the source base station 12-1.

Still further, in the same or other embodiments, the one or more processing circuits 44 of the base station 12-2 are configured to use the geometric information received from the source base station 12-1, to improve transmissions by the base station 12-2 to the mobile terminal 20. In at least one such embodiment, such processing circuits 44 are configured to improve transmissions by the base station 12-2 to the mobile terminal 20, by forming or otherwise steering directional transmissions from the base station 12-2 to the mobile terminal 20, at least initially upon the mobile terminal 20 being handed over by the source base station 12-1 to the base station 12-2, as the handover target for the mobile terminal 20.

In a similar fashion, in one or more embodiments, the one or more processing circuits 44 of the base station 12-2 are configured to use the geometric information to improve reception at the base station 12-2 of transmissions by the mobile terminal.

With the above examples in mind, those skilled in the art will appreciate that all base stations 12 may have like or similar hardware and/or software features and operations, and that the behavior and processing of any given one of the base stations 12 can be source base station or prospective target (or target) base station, depending upon the role it is playing at any given time, with respect to any given mobile terminal 20. Thus, a given base station 12 may, at a given time and with respect to a given mobile terminal 20, configure itself as the depicted base station 12-1, while at other times and/or with respect to other mobile terminals, it may configure itself as the depicted base station 12-2.

On this point, those skilled in the art will appreciate that the depicted processing circuits 44 can be dedicated hardware circuits, programmable circuits, or some mix of the two. In at least one embodiment, each base station 12 includes memory, a disk, or another computer-readable medium storing one or more computer programs comprising program instructions. Execution of such stored program instructions configure the one or more processing circuits 44 (in either or both base stations 12-1 and 12-2) in accordance with the above-described mobility management operations, and it will be therefore understood that the such processing circuits 44 can include one or more than one microprocessor-based circuit, or other programmable digital processor.

Of course, those skilled in the art will recognize that the present invention is not limited by the foregoing description or by the accompanying drawings.

## Claims

1. A method (100) of mobility management in a coordinated multipoint network (10) **characterized by**:
sharing geometric information for a mobile terminal (20) between two or more cells (14-1, 14-2) in the coordinated multipoint network (10), said geometric information determined from signal measurements made for the mobile terminal (20); and
determining a handover target for the mobile terminal (20) from among the two or more cells (14-1, 14-2), based at least in part on the geometric information,
the method comprising:
using the geometric information in a target base station (12-2) associated with a candidate cell (14-2) in the coordinated multipoint network (10) that is identified as the handover target, to improve transmissions by the target base station (12-2) to the mobile terminal (20).

2. The method of claim 1, further **characterized in that** said step of sharing the geometric information comprises a source cell (14-1) sending the geometric information to a number of candidate cells (14-2, 14-3) that are prospective handover targets for the mobile terminal (20), and further comprising:
receiving measurement information from the candidate cells (14-2, 14-3) corresponding to signal measurements made by the candidate cells (14-2, 14-3) based at least in part on the geometric information sent to them by the source cell (14-1); and
wherein said step of determining the handover target comprises identifying the handover target as a preferred one of the candidate cells (14-2, 14-3), based at least in part on evaluating the measurement information received from the candidate cells (14-2, 14-3).

3. The method of claim 1, further **characterized in that** said geometric information relates to a relative or absolute position of the mobile terminal (20), with respect to one or more base stations (12-1, 12-2) in the coordinated multipoint network.

4. The method of claim 1, further **characterized in that** said geometric information includes one or more of: directional information for the mobile terminal (20) relative to a source base station (12-1); timing advance information for the mobile terminal (20); and round-trip-time information for the mobile terminal (20).

5. The method of claim 1, further **characterized in that** said step of sharing the geometric information comprises a source base station (12-1) in the coordinated multipoint network (10) sending the geometric information to a candidate base station (12-2) in the coordinated multipoint network (10) that is a candidate for being selected as the handover target, and further comprising the candidate base station (12-2) using the geometric information to improve signal measurements made by the candidate base station (12-2) for the mobile terminal (20), wherein said signal measurements are evaluated in said step of determining the handover target.

6. The method of claim 1, further **characterized in that** said step of using the geometric information in the target base station (12-2) comprises forming or otherwise steering directional transmissions from the target base station (12-2) to the mobile terminal (20), at least initially upon the mobile terminal (20) being handed over to the target base station (12-2).

7. The method of claim 1, further **characterized by** using the geometric information in a target base station (12-2) associated with a candidate cell (14-2) in the coordinated multipoint network (10) identified as the handover target, to improve reception at the target base station (12-2) of transmissions by the mobile terminal (20).

8. The method of claim 1, further **characterized in that** the geometric information comprises one or more of: location information for a source base station (12-1), location information for one or more neighboring base stations (12-2, 12-3) associated with one or more candidate cells (14-2, 14-3) that are candidates for selection as the handover target; directional information relating the mobile terminal's angle or direction to the source (12-1) and/or neighboring base stations (12-2, 12-3); and timing information relating the mobile terminal's distance relative to the source (12-1) and/or neighboring base stations (12-2, 12-3).

9. A base station (12-2) configured to support mobility management in a coordinated multipoint network (10), said base station (12-2) comprising transceiver circuits (40) configured for transmitting signals to mobile terminals (20) and receiving signals from mobile terminals (20), and inter-base station interface circuits (42) configured for communicating with one or more other base stations (12-1) in the coordinated multipoint network (10), and wherein said base station (12-2) is **characterized by** one or more processing circuits (44) that are operatively associated with the transceiver circuits (40) and the inter-base station interface circuits (42) and configured to, when the base station (12-2) is acting as a prospective target base station for a mobile terminal (20):
receive geometric information from a source base station (12-1) for the mobile terminal (20), said geometric information based on signal measurements made for the mobile terminal (20);
make signal measurements for the mobile terminal (20), based at least in part on the geometric information; and
return the signal measurements to the source base station (12-1), for use by the source base station (12-1) in selecting a target base station for handover of the mobile terminal (20),
wherein:
the one or more processing circuits (44) are configured to use the geometric information received from the source base station (12-1) to improve transmissions by the base station (12-2) to the mobile terminal (20).

10. The base station (12-2) of claim 9, further **characterized in that** one or more processing circuits (44) are configured to use the geometric information in improving the base station's reception of signals from the mobile terminal (20), for making said signal measurements.

11. The base station (12-2) of claim 9, further **characterized in that** the geometric information comprises one or more of: directional information for the mobile terminal (20) relative to the source base station (12-1 ); timing advance information for the mobile terminal (20); round-trip-time information for the mobile terminal (20); and location information for the source base station (12-1 ).

12. The base station (12-2) of claim 11, further **characterized in that** said one or more processing circuits (44) are further configured to derive directional information for the mobile terminal (20) relative to the base station (12-2) based on the geometric information received from the source base station (12-1 ).

13. The base station (12-2) of claim 9, further **characterized in that** the one or more processing circuits (44) are configured to improve transmissions by the base station (12-2) to the mobile terminal (20) by forming or otherwise steering directional transmissions from the base station (12-2) to the mobile terminal (20), at least initially upon the mobile terminal (20) being handed over by the source base station (12-1 ) to the base station (12-2) as the handover target for the mobile terminal (20).

14. The base station (12-2) of claim 9, further **characterized in that** the one or more processing circuits (44) are configured to use the geometric information to improve reception at the base station (12-2) of transmissions by the mobile terminal (20).

## Patentansprüche

1. Verfahren (100) zur Mobilitätsverwaltung in einem koordinierten Mehrpunktnetzwerk (10), **gekennzeichnet durch**:
gemeinsames Verwenden von geometrischer Information für ein mobiles Endgerät (20) **durch** zwei oder mehr Zellen (14-1, 14-2) in dem koordinierten Mehrpunktnetzwerk (10), wobei die geometrische Information aus Signalmessungen bestimmt wird, die für das mobile Endgerät (20) vorgenommen wurden; und
Bestimmen eines Verbindungsübergabeziels für das mobile Endgerät (20) unter den zwei oder mehr Zellen (14-1, 14-2), und zwar zumindest teilweise auf der Grundlage der geometrischen Information,
wobei das Verfahren umfasst:
Verwenden der geometrischen Information in einer Ziel-Basisstation (12-2), die mit einer als das Verbindungsübergabeziel identifizierten Kandidatenzelle (14-2) in dem koordinierten Mehrpunktnetzwerk (10) verknüpft ist, um Übertragungen **durch** die Ziel-Basisstation (12-2) zu dem mobilen Endgerät (20) zu verbessern.

2. Verfahren nach Anspruch 1, ferner **dadurch gekennzeichnet, dass** der Schritt des gemeinsamen Verwendens der geometrischen Information umfasst: durch eine Quellzelle (14-1) erfolgendes Senden der geometrischen Information an eine Anzahl von Kandidatenzellen (14-2, 14-3), die potentielle Verbindungsübergabeziele für das mobile Endgerät (20) sind, und ferner umfassend:
Empfangen von Messungsinformation von den Kandidatenzellen (14-2, 14-3), die Signalmessungen entspricht, die durch die Kandidatenzellen (14-2, 14-3) zumindest teilweise auf der Grundlage der durch die Quellzelle (14-1) an sie gesendeten geometrischen Information vorgenommen wurden; und
worin der Schritt des Bestimmens des Verbindungsübergabeziels umfasst: Identifizieren des Verbindungsübergabeziels als eine bevorzugte der Kandidatenzellen (14-2, 14-3), und zwar zumindest teilweise auf der Grundlage des Bewertens der von den Kandidatenzellen (14-2, 14-3) empfangenen Messungsinformation.

3. Verfahren nach Anspruch 1, ferner **dadurch gekennzeichnet, dass** sich die geometrische Information auf eine relative oder absolute Position des mobilen Endgeräts (20) im Hinblick auf eine oder mehrere Basisstationen (12-1, 12-2) in dem koordinierten Mehrpunktnetzwerk bezieht.

4. Verfahren nach Anspruch 1, ferner **dadurch gekennzeichnet, dass** die geometrische Information eines oder mehrere von Folgendem einschließt: Richtungsinformation für das mobile Endgerät (20) relativ zu einer Quell-Basisstation (12-1); Zeitvoreilungsinformation für das mobile Endgerät (20); und Umlaufzeitinformation für das mobile Endgerät (20).

5. Verfahren nach Anspruch 1, ferner **dadurch gekennzeichnet, dass** der Schritt des gemeinsamen Verwendens der geometrischen Information umfasst: durch eine Quell-Basisstation (12-1) in dem koordinierten Mehrpunktnetzwerk (10) erfolgendes Senden der geometrischen Information an eine Kandidaten-Basisstation (12-2) in dem koordinierten Mehrpunktnetzwerk (10), die ein Kandidat für die Auswahl als das Verbindungsübergabeziel ist, und ferner umfassend: durch die Kandidaten-Basisstation (12-2) erfolgendes Verwenden der geometrischen Information, um durch die Kandidaten-Basisstation (12-2) für das mobile Endgerät (20) vorgenommene Signalmessungen zu verbessern, worin die Signalmessungen in dem Schritt des Bestimmens des Verbindungsübergabeziels bewertet werden.

6. Verfahren nach Anspruch 1, ferner **dadurch gekennzeichnet, dass** der Schritt des Verwendens der geometrischen Information in der Ziel-Basisstation (12-2) umfasst: Bilden oder andernfalls Lenken von gerichteten Übertragungen von der Kandidaten-Basisstation (12-2) zum mobilen Endgerät (20), zumindest anfangs, wenn das mobile Endgerät (20) an die Ziel-Basisstation (12-2) übergeben wird.

7. Verfahren nach Anspruch 1, ferner **gekennzeichnet durch** Verwenden der geometrischen Information in einer als das Verbindungsübergabeziel identifizierten Ziel-Basisstation (12-2), die mit einer Kandidatenzelle (14-2) in dem koordinierten Mehrpunktnetzwerk (10) verknüpft ist, um den Empfang von Übertragungen **durch** das mobile Endgerät (20) in der Ziel-Basisstation (12-2) zu verbessern.

8. Verfahren nach Anspruch 1, ferner **dadurch gekennzeichnet, dass** die geometrische Information eines mehrere von Folgendem umfasst: Standortinformation für eine Quell-Basisstation (12-1), Standortinformation für eine oder mehrere benachbarte Basisstationen (12-2, 12-3), die mit einer oder mehreren Kandidatenzellen (14-2, 14-3) verknüpft sind, die Kandidaten für die Auswahl als das Verbindungsübergabeziel sind; Richtungsinformation bezüglich des Winkels oder der Richtung des mobilen Endgeräts zu der Quell- (12-1) und/oder den benachbarten Basisstationen (12-2, 12-3); und Zeitinformation bezüglich der Entfernung des mobilen Endgeräts relativ zu der Quell-(12-1) und/oder den benachbarten Basisstationen (12-2, 12-3).

9. Basisstation (12-2), die dafür konfiguriert ist, Mobilitätsverwaltung in einem koordinierten Mehrpunktnetzwerk (10) zu unterstützen, wobei die Basisstation (12-2) umfasst: Sendeempfängerschaltungen (40), die zum Übertragen von Signalen zu mobilen Endgeräten (20) und Empfangen von Signalen von den mobilen Endgeräten (20) konfiguriert sind, und Zwischenbasisstationsschnittstellenschaltungen (42), die zum Kommunizieren mit einer oder mehreren anderen Basisstationen (12-1) in dem koordinierten Mehrpunktnetzwerk (10) konfiguriert sind, und worin die Basisstation (12-2) durch eine oder mehrere Verarbeitungsschaltungen (44) gekennzeichnet ist, die mit den Sendeempfängerschaltungen (40) und den Zwischenbasisstationsschnittstellenschaltungen (42) betrieblich verknüpft und dafür konfiguriert sind, wenn die Basisstation (12-2) als eine potentielle Ziel-Basisstation für ein mobiles Endgerät (20) fungiert:
geometrische Information von einer Quell-Basisstation (12-1) für das mobile Endgerät (20) zu empfangen, wobei die geometrische Information auf Signalmessungen beruht, die für das mobile Endgerät (20) vorgenommen wurden;
Signalmessungen für das mobile Endgerät (20) vorzunehmen, und zwar zumindest teilweise auf der Grundlage der geometrischen Information; und
die Signalmessungen an die Quell-Basisstation (12-1) zurückzusenden, und zwar zur Verwendung durch die Quell-Basisstation (12-1) beim Auswählen einer Ziel-Basisstation für eine Verbindungsübergabe des mobilen Endgeräts (20),
worin:
die eine oder mehreren Verarbeitungsschaltungen (44) dafür konfiguriert sind, die von der Quell-Basisstation (12-1) empfangene geometrische Information zu verwenden, um Übertragungen durch die Basisstation (12-2) zu dem mobilen Endgerät (20) zu verbessern.

10. Basisstation (12-2) nach Anspruch 9, ferner **dadurch gekennzeichnet, dass** eine oder mehreren Verarbeitungsschaltungen (44) dafür konfiguriert sind, die geometrische Information beim Verbessern des Empfangs von Signalen vom mobilen Endgerät (20) durch die Basisstation zum Vornehmen der Signalmessungen zu verwenden.

11. Basisstation (12-2) nach Anspruch 9, ferner **dadurch gekennzeichnet, dass** die geometrische Information eines oder mehrere von Folgendem einschließt: Richtungsinformation für das mobile Endgerät (20) relativ zur Quell-Basisstation (12-1); Zeitvoreilungsinformation für das mobile Endgerät (20); Umlaufzeitinformation für das mobile Endgerät (20); und Standortinformation für die Quell-Basisstation (12-1).

12. Basisstation (12-2) nach Anspruch 11, ferner **dadurch gekennzeichnet, dass** die eine oder mehreren Verarbeitungsschaltungen (44) ferner dafür konfiguriert sind, Richtungsinformation für das mobile Endgerät (20) relativ zur Basisstation (12-2) auf der Grundlage der von der Quell-Basisstation (12-1) empfangenen geometrischen Information abzuleiten.

13. Basisstation (12-2) nach Anspruch 9, ferner **dadurch gekennzeichnet, dass** die eine oder mehreren Verarbeitungsschaltungen (44) dafür konfiguriert sind, Übertragungen durch die Basisstation (12-2) zum mobilen Endgerät (20) durch Bilden oder andernfalls Lenken von gerichteten Übertragungen von der Basisstation (12-2) zum mobilen Endgerät (20) zu verbessern, zumindest anfangs, wenn das mobile Endgerät (20) durch die Basisstation (12-1) an die Basisstation (12-2) als das Verbindungsübergabeziel für das mobile Endgerät (20) übergeben wird.

14. Basisstation (12-2) nach Anspruch 9, ferner **dadurch gekennzeichnet, dass** die eine oder mehreren Verarbeitungsschaltungen (44) dafür konfiguriert sind, die geometrische Information zu verwenden, um den Empfang von Übertragungen durch das mobile Endgerät (20) in der Basisstation (12-2) zu verbessern.

## Revendications

1. Procédé (100) de gestion de la mobilité dans un réseau multipoint coordonné (10), **caractérisé par** :
le partage d'informations géométriques pour un terminal mobile (20) entre deux cellules ou plus (14-1, 14-2) dans le réseau multipoint coordonné (10), lesdites informations géométriques étant déterminées à partir de mesures de signal réalisées pour le terminal mobile (20) ; et
la détermination d'une cible de transfert intercellulaire pour le terminal mobile (20) parmi les deux cellules ou plus (14-1, 14-2), sur la base, au moins en partie, des informations géométriques ;
le procédé comprenant :
l'utilisation des informations géométriques dans une station de base cible (12-2) associée à une cellule candidate (14-2), dans le réseau multipoint coordonné (10), qui est identifiée en qualité de cible de transfert intercellulaire, en vue d'améliorer les transmissions de la station de base cible (12-2) au terminal mobile (20).

2. Procédé selon la revendication 1, **caractérisé en outre en ce que** ladite étape de partage des informations géométriques comprend l'envoi, par une cellule source (14-1), des informations géométriques, à un nombre de cellules candidates (14-2, 14-3) qui constituent des cibles de transfert intercellulaire potentielles pour le terminal mobile (20), et comprenant en outre :
la réception d'informations de mesure à partir de cellules candidates (14-2, 14-3) correspondant à des mesures de signal exécutées par les cellules candidates (14-2, 14-3), sur la base, au moins en partie, des informations géométriques qui leur sont envoyées par la cellule source (14-1); et
dans lequel ladite étape de détermination de la cible de transfert intercellulaire comprend l'identification de la cible de transfert intercellulaire en tant qu'une cellule préférée parmi les cellules candidates (14-2, 14-3), sur la base, au moins en partie, de l'évaluation des informations de mesure reçues à partir des cellules candidates (14-2, 14-3).

3. Procédé selon la revendication 1, **caractérisé en outre en ce que** lesdites informations géométriques concernent une position relative ou absolue du terminal mobile (20), relativement à une ou plusieurs stations de base (12-1, 12-2) dans le réseau multipoint coordonné.

4. Procédé selon la revendication 1, **caractérisé en outre en ce que** lesdites informations géométriques incluent une ou plusieurs des informations ci-après : des informations directionnelles pour le terminal mobile (20) relativement à une station de base source (12-1) ; des informations d'avance temporelles pour le terminal mobile (20) ; et des informations de temps de propagation en boucle pour le terminal mobile (20).

5. Procédé selon la revendication 1, **caractérisé en outre en ce que** ladite étape de partage des informations géométriques comprend l'envoi, par une station de base source (12-1) dans le réseau multipoint coordonné (10), des informations géométriques à une station de base candidate (12-2) dans le réseau multipoint coordonné (10), laquelle est une station candidate à une sélection en tant que cible de transfert intercellulaire, et comprenant en outre l'utilisation, par la station de base candidate (12-2), des informations géométriques, en vue d'améliorer les mesures de signal exécutées par la station de base candidate (12-2) pour le terminal mobile (20), dans lequel lesdites mesures de signal sont évaluées au cours de ladite étape de détermination de la cible de transfert intercellulaire.

6. Procédé selon la revendication 1, **caractérisé en outre en ce que** ladite étape d'utilisation des informations géométriques dans la station de base cible (12-2) comprend la formation, ou sinon l'orientation, de transmissions directionnelles, de la station de base cible (12-2) au terminal mobile (20), au moins initialement lors du transfert du terminal mobile (20) vers la station de base cible (12-2).

7. Procédé selon la revendication 1, **caractérisé en outre par** l'utilisation des informations géométriques dans une station de base cible (12-2) associée à une cellule candidate (14-2) dans le réseau multipoint coordonné (10), identifiée en tant que cible de transfert intercellulaire, en vue d'améliorer la réception, au niveau de la station de base cible (12-2), de transmissions provenant du terminal mobile (20).

8. Procédé selon la revendication 1, **caractérisé en outre en ce que** les informations géométriques comprennent une ou plusieurs des informations ci-après : des informations de localisation pour une station de base source (12-1), des informations de localisation pour une ou plusieurs stations de base voisines (12-2, 12-3) associées à une ou plusieurs cellules candidates (14-2, 14-3) lesquelles constituent des cellules candidates à une sélection en tant que cible de transfert intercellulaire ; des informations directionnelles concernant l'angle ou la direction du terminal mobile relativement à la station de base source (12-1) et/ou aux stations de base voisines (12-2, 12-3) ; et des informations temporelles concernant la distance du terminal mobile relativement à la station de base source (12-1) et/ou aux stations de base voisines (12-2, 12-3).

9. Station de base (12-2) configurée de manière à prendre en charge la gestion de la mobilité dans un réseau multipoint coordonné (10), ladite station de base (12-2) comprenant des circuits d'émission-réception (40) configurés de manière à transmettre des signaux à des terminaux mobiles (20) et à recevoir des signaux provenant de terminaux mobiles (20), et des circuits d'interface entre stations de base (42) configurés de manière à communiquer avec une ou plusieurs autres stations de base (12-1) dans le réseau multipoint coordonné (10), et dans laquelle ladite station de base (12-2) est **caractérisée par** un ou plusieurs circuits de traitement (44) qui sont fonctionnellement associés aux circuits d'émission-réception (40) et aux circuits d'interface entre stations de base (42), et configurés de manière à, lorsque la station de base (12-2) fait office de station de base cible éventuelle pour un terminal mobile (20) :
recevoir des informations géométriques à partir d'une station de base source (12-1) pour le terminal mobile (20), lesdites informations géométriques étant basées sur des mesures de signal effectuées pour le terminal mobile (20) ;
effectuer des mesures de signal pour le terminal mobile (20), sur la base, au moins en partie, des informations géométriques ; et
renvoyer les mesures de signal à la station de base source (12-1), afin qu'elles soient utilisées par la station de base source (12-1) lors de la sélection d'une station de base cible pour un transfert intercellulaire du terminal mobile (20) ;
dans laquelle :
ledit un ou lesdits plusieurs circuits de traitement (44) sont configurés de manière à utiliser les informations géométriques reçues à partir de la station de base source (12-1), en vue d'améliorer les transmissions de la station de base (12-2) au terminal mobile (20).

10. Station de base (12-2) selon la revendication 9, **caractérisée en outre en ce qu'**un ou plusieurs circuits de traitement (44) sont configurés de manière à utiliser les informations géométriques en vue d'améliorer la réception, par la station de base, de signaux provenant du terminal mobile (20), afin d'effectuer lesdites mesures de signal.

11. Station de base (12-2) selon la revendication 9, **caractérisée en outre en ce que** les informations géométriques comprennent une ou plusieurs des informations ci-après : des informations directionnelles pour le terminal mobile (20), relativement à la station de base source (12-1) ; des informations d'avance temporelles pour le terminal mobile (20) ; des informations de temps de propagation en boucle pour le terminal mobile (20) ; et des informations de localisation pour la station de base source (12-1).

12. Station de base (12-2) selon la revendication 11, **caractérisée en outre en ce que** ledit un ou lesdits plusieurs circuits de traitement (44) sont en outre configurés de manière à dériver des informations directionnelles pour le terminal mobile (20) relativement à la station de base (12-2), sur la base des informations géométriques reçues à partir de la station de base source (12-1).

13. Station de base (12-2) selon la revendication 9, **caractérisée en outre en ce que** ledit un ou lesdits plusieurs circuits de traitement (44) sont configurés de manière à améliorer les transmissions de la station de base (12-2) au terminal mobile (20) en formant, ou sinon en orientant, les transmissions directionnelles de la station de base (12-2) au terminal mobile (20), au moins initialement lors du transfert intercellulaire du terminal mobile (20), par la station de base source (12-1), vers la station de base (12-2), en tant que cible de transfert intercellulaire pour le terminal mobile (20).

14. Station de base (12-2) selon la revendication 9, **caractérisée en outre en ce que** ledit un ou lesdits plusieurs circuits de traitement (44) sont configurés de manière à utiliser les informations géométriques en vue d'améliorer la réception, au niveau de la station de base (12-2), de transmissions par le terminal mobile (20).
